# EUROPEAN PATENT APPLICATION

(11) **EP 2 384 957 A1**
(43) Date of publication of application: **09.11.2011**
(21) Application number: 11164906.7
(22) Date of filing: 05.05.2011
(51) Int. Cl.: B62H 1/02, B62K 19/30

(54) **Kickstand on a bicycle frame**

(30) Priority: 07.05.2010 IT PD20100146
(71) Applicant: Ursus S.P.A., 36027 Rosa' VI (IT)
(72) Inventor: Ferronato, Sergio, 36027 Rosa' VI (IT)
(74) Representative: Modiano, Micaela Nadia

(57) **Abstract**

A device for mounting a kickstand on a bicycle frame (15), comprising
- a pivoting head (13) for a kickstand rod (14), the head (13) being integrated monolithically with a bicycle frame (15) or welded to the bicycle frame (15) and having two abutment surfaces (16,17) that cooperate to form means for the reversible locking of a kickstand rod (14) in two configurations, a first configuration for resting on the ground and a second raised configuration,
- a kickstand rod (14), which is adapted to be pivoted to the pivoting head (13) by means of a pivoting pin, the rod (14) comprising elastic pusher means (19) that are adapted to cooperate with the abutment surfaces (16,17) to form said reversible locking means.

## Description

The present invention relates to a device for mounting a kickstand on a bicycle frame.

The invention also relates to an improved bicycle frame.

The invention also relates to a kickstand designed for being fixed to the improved bicycle frame.

Nowadays, for mounting a kickstand on a bicycle frame, the bicycle frame is generally arranged with a plate under or near the bottom bracket, and this plate is perforated for screwing to a corresponding strike plate which carries the head of the point of articulation of a kickstand.

Fixing a kickstand to a bicycle frame therefore always requires a screw to be applied in order to lock the strike plate of the kickstand to the plate welded to the bicycle frame.

This operation is normally uncomfortable, because it needs to be performed under the bicycle frame, and it is therefore necessary to turn the bicycle frame over, or to lift the bicycle frame with a suitable hoist or other support.

Overall, the set of operations required is laborious to perform, requires a certain manual skill and, especially, involves a high expenditure of time on an assembly line.

The aim of the present invention is to provide a device for mounting a kickstand on a bicycle frame which is capable of overcoming the above-mentioned drawbacks in the known art.

Within this aim, an object of the invention is to provide an improved bicycle frame that is designed for quick mounting of a kickstand by means of a device according to the invention.

Another object of the invention is to develop a kickstand that is designed to be mounted onto the improved bicycle frame by means of a device according to the main aim indicated above.

Another object of the invention is to develop a device that speeds up the mounting of a kickstand onto a bicycle frame.

Another object of the invention is to develop a device that allows a more compact packaging for a kickstand dismounted from the bicycle frame.

Another object of the invention is to provide a device for mounting a kickstand on a bicycle frame, an improved bicycle frame, and a kickstand designed for said improved bicycle frame, which can all be made with known systems and technologies, as well as at low cost.

This aim, as well as these and other objects which will become better apparent hereinafter, are achieved by a device for mounting a kickstand on a bicycle frame, characterized in that it comprises
- a pivoting head for a kickstand rod, said head being integrated monolithically with a bicycle frame or welded to said bicycle frame and having two abutment surfaces that cooperate to form means for the reversible locking of a kickstand rod in two configurations, a first configuration for resting on the ground and a second raised configuration,
- a kickstand rod, which is adapted to be pivoted to said pivoting head by means of a pivoting pin, said rod comprising elastic pusher means that are adapted to cooperate with said abutment surfaces so as to form said reversible locking means.

Further characteristics and advantages of the invention will become better apparent from the description of two preferred, but not exclusive, embodiments of the device according to the invention, illustrated by way of non-limiting example in the accompanying drawings, wherein:
Figure 1 is an end elevation view of a bicycle frame according to the invention provided with a device according to the invention in a first embodiment thereof;
Figure 2 is a front elevation view of the device in Figure 1;
Figure 3 is an exploded perspective view of the device in its first embodiment;
Figure 4 is a partially sectional end elevation view of the device according to the invention, prepared for being mounted;
Figures 5 and 6 each show a step of mounting the device according to the invention;
Figures 7 and 8 are, respectively, a lateral view and a front view of a second embodiment of the device according to the invention.

With reference to the figures, a device for mounting a kickstand on a bicycle frame is indicated with the reference numeral 10, the kickstand with the reference numeral 11 and the bicycle frame with the reference numeral 12.

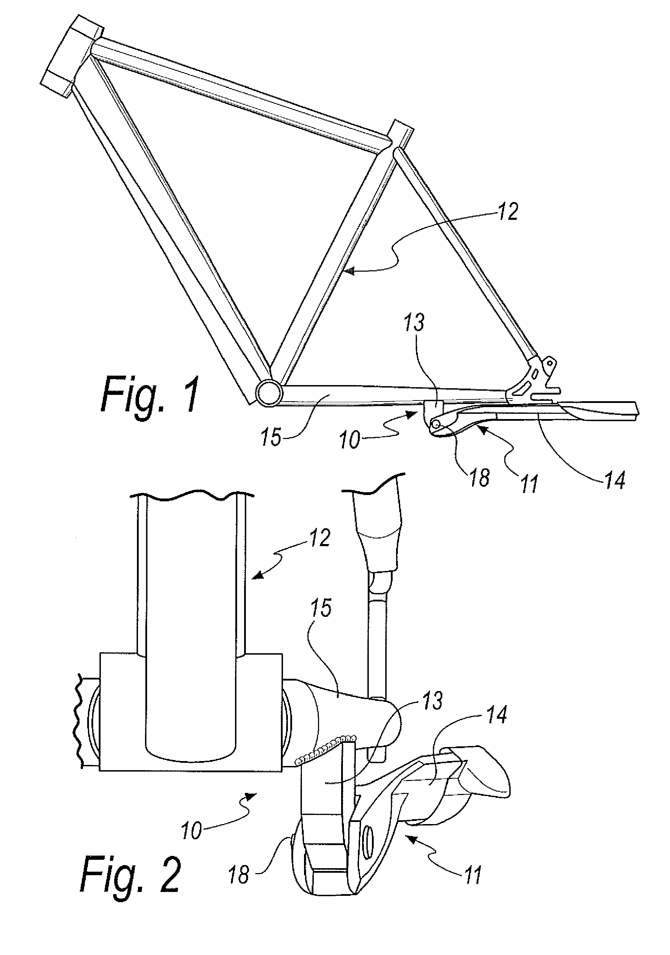

The device 10 comprises a pivoting head 13 for a kickstand rod 14. The pivoting head 13 is integrated monolithically or is welded, as in Figures 1 and 2, to a part of the bicycle frame 12.

In the embodiment of the invention described herein, which is intended for the purposes of non-limiting example of the invention, the pivoting head 13 is welded to the bicycle frame 12, and in particular it is welded to a lower rear fork 15, or below the sleeve of the bottom bracket, as described hereinbelow, of the bicycle frame 12.

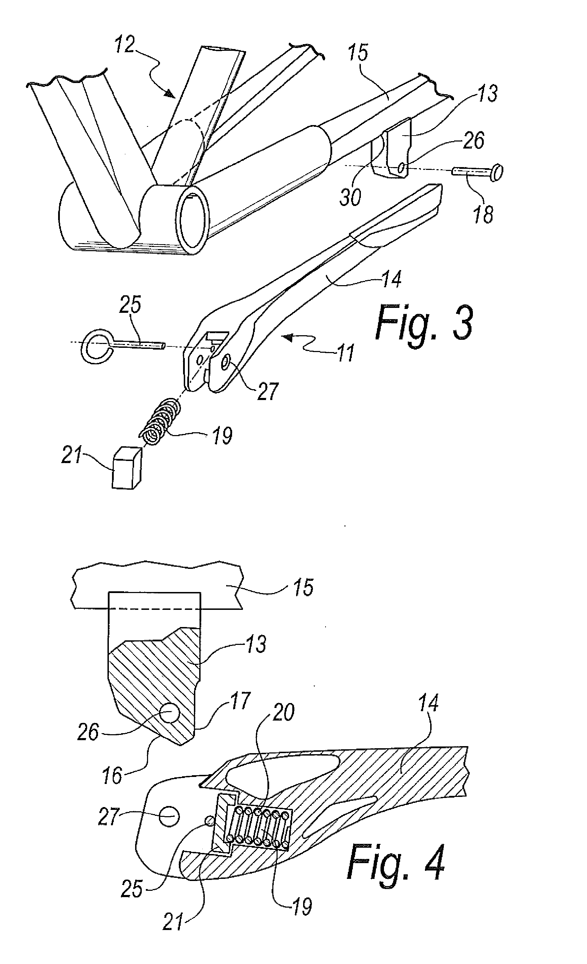

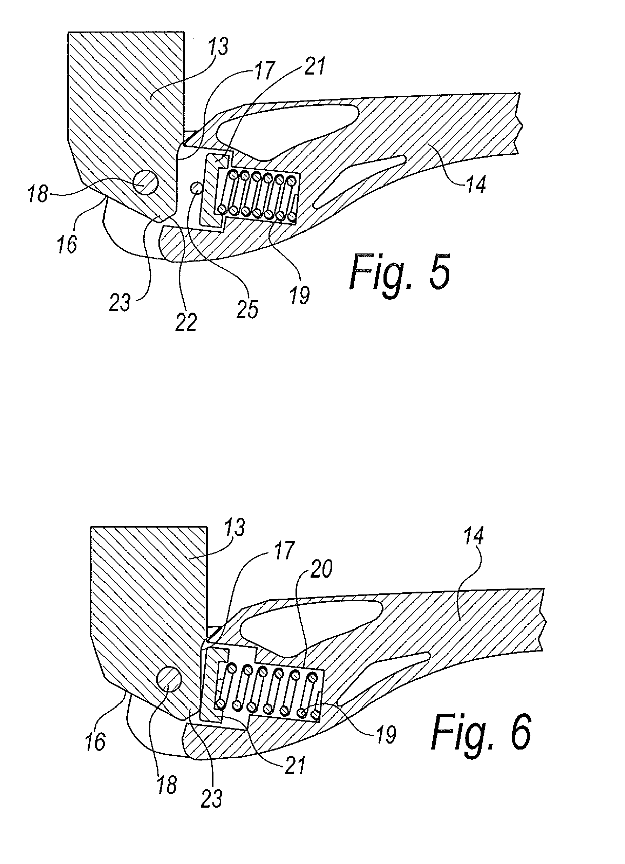

The pivoting head 13 has two abutment surfaces, 16 and 17 respectively, which can clearly be seen in Figures 4, 5 and 6, which cooperate to form means, described hereinbelow, for the reversible locking of the kickstand rod 14 in two configurations, a first configuration for resting on the ground and a second raised configuration.

The device 10 also comprises a kickstand rod 14, which is adapted to be pivoted to the pivoting head 13 by means of a pivoting pin 18.

The rod 14 comprises elastic pusher means that are adapted to cooperate with the abutment surfaces 16 and 17 to form the reversible locking means.

These elastic pusher means are constituted by a helical compression spring 19 that is arranged in a corresponding seat 20 formed on the kickstand rod 14 and open at the end of the rod 14 that is designed to be pivoted to the pivoting head 13.

The helical spring 19 is adapted to push a pusher plate 21 that is designed to abut, pushed by the spring 19, alternately against one of the two abutment surfaces 16 and 17, depending on the configuration that the user causes the kickstand 11 to assume.

The two abutment surfaces 16 and 17 are connected by a curved or partially curved portion 22, and as a whole form a cam-like protrusion 23 that is adapted to compress the spring 19 during transition from one configuration to the other of the kickstand rod 14. The compression can only be achieved with the external intervention of a user, thus determining the stable position of the rod 14 in one configuration or the other.

The means for reversible locking of the kickstand rod 14 in the two configurations, the ground resting configuration and the raised configuration, are constituted by the abutment surfaces 16 and 17 of the cam-like protrusion 23, and by the pusher plate 21 that is pushed by the spring 19.

Advantageously the kickstand 11 is designed for quick fixing to the pivoting head 13 by means of the precompression of the spring 19, and the locking of the spring 19, with the pusher plate 21, in a precompressed configuration, by means of a removable locking pin 25 that is inserted transversely in the end portion of the rod 14, at the seat 20 for the spring 19.

This arrangement is shown clearly in Figure 4.

The functioning of the device for mounting a kickstand on a bicycle frame, according to the invention, is as follows.

The technician on the assembly line receives a bicycle frame 12 with the pivoting head 13 welded thereto, and the kickstand 11 with the compression spring 19 which is precompressed by means of the locking pin 25, as shown in Figure 4.

The technician pivots the end of the rod 14 onto the head 13 by inserting the pivoting pin 18 in the corresponding holes 26, on the head 13, and 27, on the end of the rod 14.

The technician extracts the locking pin 25 from the same end of the rod 14, thus freeing the spring 19 which is now free to push the plate 21 against the cam-like protrusion 23.

The device 10 according to the invention thus allows the very quick mounting of a kickstand 11 onto a bicycle frame 12 with two simple operations, a first operation of inserting the pivoting pin 18, and a second operation of removing the locking pin 25.

The pivoting head 13 is intended to be capable of being welded in any position along the lower rear fork 15, according to necessity and to the requirements of the purchaser of the bicycle frame 12.

The surface 30 of the head 13 that faces the lower rear fork 15 is shaped complementary to the surface of the fork 15 against which it is designed to be fixed.

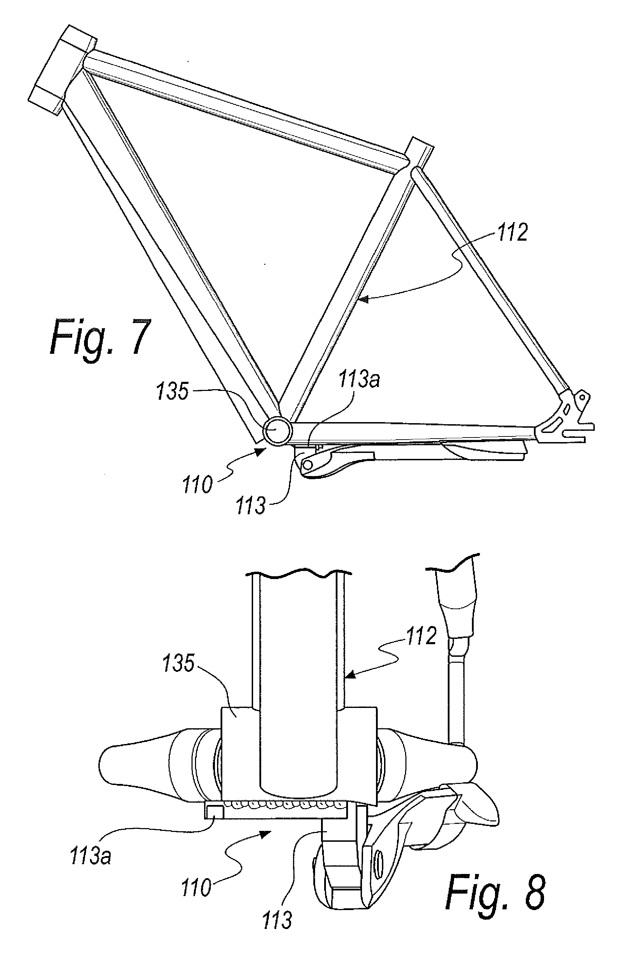

In a second embodiment, shown in Figures 7 and 8, the device 110 according to the invention has a head 113 provided with a flat bracket 113a that is designed either to be integrated monolithically with the frame 112, or to be made separately and then welded to the frame 112, below or in the vicinity of the sleeve 135 of the bottom bracket.

The invention also relates to a bicycle frame 12, the distinctive characteristic of which is that it has a pivoting head 13 for a kickstand integrated monolithically with the bicycle frame 12, or welded to the bicycle frame 12.

The invention also relates to a bicycle kickstand 11, of the type comprising elastic pusher means that are adapted to cooperate with corresponding abutment surfaces 16 and 17 of a pivoting head 13, so as to form the means for the reversible locking of the kickstand rod 14 in a configuration selected between two configurations, a lowered one for use and a raised one for non-use; the distinctive characteristic of the kickstand 11 is that it is designed for quick fixing to the pivoting head 13 by means of the precompression of the elastic means, i.e. of the spring 19, by locking of the spring 19, with the pusher plate 21, in a precompressed configuration, by means of an extractable locking pin 25 that is inserted transversely in the end portion of the rod 14 at the seat 20 for the spring 19.

In practice it has been found that the invention fully achieves the intended aim and objects.

In particular, with the invention a device has been developed which speeds up the mounting of a kickstand onto a bicycle frame, as well as an improved bicycle frame that is designed for quick mounting of a kickstand by means of a device according to the invention.

Moreover, with the invention a kickstand has been developed which is designed to be mounted onto the improved bicycle frame by means of a device as explained above.

What is more, with the invention a device has been developed which allows a more compact packaging for a kickstand dismounted from the bicycle frame, because the kickstand according to the invention does not comprise the pivoting head which is associated with the bicycle frame.

Moreover, with the invention a device for mounting a kickstand on a bicycle frame, an improved bicycle frame, and a kickstand designed for said improved bicycle frame, which can all be made with known systems and technologies, as well as at low cost, have been provided.

The invention, thus conceived, is susceptible of numerous modifications and variations, all of which are within the scope of the appended claims. Moreover, all the details may be substituted by other, technically equivalent elements.

In practice the materials employed, as well as the dimensions and the contingent shapes, may be any according to requirements and to the state of the art.

The disclosures in Italian Patent Application No. PD2010A000146 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A device (10) for mounting a kickstand (11) on a bicycle frame (12), **characterized in that** it comprises
- a pivoting head (13) for a kickstand rod (14), said head (13) being integrated monolithically with a bicycle frame (12) or welded to said bicycle frame (12) and having two abutment surfaces (16, 17) that cooperate to form means for the reversible locking of a kickstand rod (14) in two configurations, a first configuration for resting on the ground and a second raised configuration,
- a kickstand rod (14), which is adapted to be pivoted to said pivoting head (13) by means of a pivoting pin (18), said rod (14) comprising elastic pusher means (19) that are adapted to cooperate with said abutment surfaces (16, 17) to form said reversible locking means.

2. The device according to claim 1, **characterized in that** said elastic pusher means are constituted by a helical compression spring (19) arranged in a corresponding seat (20) that is formed on the kickstand rod (14) and is open at the end of said rod that is designed to be pivoted to the pivoting head (13), said helical spring (19) being adapted to push a pusher plate (21) that is designed to abut against one of the two abutment surfaces (16, 17) alternately.

3. The device according to the preceding claims, **characterized in that** said two abutment surfaces (16, 17) are connected by a curved or partially curved portion (22) and as a whole form a cam-like protrusion (23) that is adapted to compress the spring (19) during transition from one configuration to the other of the kickstand rod (14).

4. The device according to the preceding claims, **characterized in that** said means for reversible locking of the kickstand rod (14) in the two configurations, the ground resting configuration and the raised configuration, are constituted by the abutment surfaces (16, 17) of the cam-like protrusion (23), and by the pusher plate (21) that is pushed by the spring (19).

5. The device according to the preceding claims, **characterized in that** said kickstand (11) is designed for quick fixing to the pivoting head (13) by means of the precompression of the spring (19), and the locking of said spring (19), with the pusher plate (21), in a precompressed configuration, by means of a removable locking pin (25) that is inserted transversely in the end portion of the rod (14), at the seat (20) for said spring (19).

6. The device according to the preceding claims, **characterized in that** the surface (30) of said head (13) that faces the lower rear fork (15) is shaped complementary to the surface of said fork (15) against which it is designed to be fixed.

7. The device according to the preceding claims, **characterized in that** it has a head (113) provided with a flat bracket (113a) that is designed to be integrated monolithically with said frame (112) or welded to the frame (112), below or in the vicinity of the sleeve (135) of the bottom bracket.

8. A bicycle frame (12), **characterized in that** it has a pivoting head (13) for a kickstand (11) which is integrated monolithically or welded.

9. A bicycle kickstand (11), of the type comprising elastic pusher means adapted to cooperate with corresponding abutment surfaces (16, 17) of a pivoting head (13), to form the means for the reversible locking of the kickstand rod (14) in a configuration selected between two configurations, a lowered one for use and a raised one, for quick fixing to said pivoting head (13) by means of the precompression of said elastic pusher means by an extractable locking pin (25) that is inserted transversely in the end portion of the rod (14).
